# EUROPÄISCHE PATENTSCHRIFT

(11) **EP 0 646 504 B1**
(45) Veröffentlichungstag und Bekanntmachung des Hinweises auf die Patenterteilung: **03.02.1999**
(21) Anmeldenummer: 94115252.2
(22) Anmeldetag: 28.09.1994
(51) Int. Cl.: B60R 22/34, B60R 22/36

(54) **Gurtaufroller für Rückhaltesysteme in Fahrzeugen**
Belt retractor for restraint systems in vehicles
Enrouleur de ceinture pour des systèmes de retenue dans des véhicules

(30) Priorität: 04.10.1993 DE 4333760
(43) Veröffentlichungstag der Anmeldung: 05.04.1995
(73) Patentinhaber: TRW Occupant Restraint Systems GmbH & Co. KG, 73551 Alfdorf (DE)
(72) Erfinder: Mödinger, Thomas, D-73553 Alfdorf (DE); Schmid, Johannes, D-73527 Schwäbisch Gmünd (DE)
(74) Vertreter: Degwert, Hartmut, Dipl.-Phys.

(56) Entgegenhaltungen:
- DE-A- 3 244 204
- US-A- 3 471 100

## Beschreibung

Die Erfindung betrifft einen Gurtaufroller für Rückhaltesysteme in Fahrzeugen, mit einem am Fahrzeugaufbau mittels einer Befestigungsplatte zu befestigenden Gehäuse, in dem eine Gurtspule drehbar gelagert ist, deren Flansche jeweils eine Sperrverzahnung aufweisen, und wenigstens einem bandförmigen Mantelabschnitt des Gehäuses, worin der bandförmige Mantelabschnitt die am Außenumfang der Flansche angebrachten Sperrverzahnungen umgibt.

Gurtaufroller für Rückhaltesysteme in Fahrzeugen sind in zahlreichen Ausführungen bekannt. Weit verbreitet ist eine Bauform mit einem lasttragenden Gehäuse, das aus einer gestanzten und U-förmigen Stahlplatte gebildet ist. Zwischen den beiden parallelen Schenkeln des Gehäuses ist die Gurtspule drehbar gelagert. Die Befestigung des Gehäuses im Fahrzeug erfolgt an der die beiden Schenkel des Gehäuses verbindenden Basis, die als Befestigungsplatte mit einer Öse ausgebildet ist. Im Rückhaltefalle muß das Gehäuse außer der Last im Gurtband auch die bei der drehfesten Blockierung der Gurtspule auftretenden Kräfte aufnehmen und über seine Befestigungsplatte in den Fahrzeugaufbau einleiten. Um diese Forderung zu erfüllen, verwendet man für die Herstellung des Gehäuses Stahlblech einer Stärke von 2 mm oder mehr. Diese Dimensionierung führt zu hohem Gewicht und Materialaufwand.

Da man in der Fahrzeugtechnik allgemein bestrebt ist, Gewicht und Material einzusparen, wird bei herkömmlichen Konstruktionen von Gurtaufrollern das Gehäuse mit Aussparungen in denjenigen Bereichen versehen, die aufgrund der Geometrie keinen hohen Beanspruchungen ausgesetzt sind. Dennoch hat das Gehäuse einen großen Anteil am Gesamtgewicht des Gurtaufrollers.

Aus der US-Patentschrift Nr. 3 471 100 ist ein gattungsgemäßer Gurtaufroller bekannt, bei dem ein bandförmiger Mantelabschnitt des Gehäuses, der aus einem Zylinder besteht, durch an beiden Enden aufgeschobene Endkappen gehalten wird. Eine Befestigungsplatte ist gabelförmig ausgebildet und nimmt das Gehäuse zwischen sich auf. Die Verbindung der Befestigungsplatte mit dem Gehäuse erfolgt über einen einzigen, sich in Richtung der Gurtspulenachse durch das Gehäuse erstreckenden Lagerbolzen, der in den Endkappen und in Verstärkungsplatten gelagert ist, die wiederum in den Endkappen angeordnet sind. Der bandförmige Mantelabschnitt steht mit der Befestigungsplatte nicht direkt in Verbindung. Eine Gurtspule ist sowohl in den Verstärkungsplatten als auch in den Endkappen gelagert, so daß deren Lager auch unter Last nicht nachgeben können.

Durch die Erfindung wird ein Gurtaufroller für Rückhaltesysteme in Fahrzeugen geschaffen, der gegenüber herkömmlichen Bauformen ein deutlich vermindertes Gewicht und besonders in Axialrichtung der Gurtspule eine geringere Baugröße aufweist. Erfindungsgemäß ist hierzu ein Gurtaufroller für Rückhaltesysteme in Fahrzeugen vorgesehen, der ein am Fahrzeugaufbau mittels einer Befestigungsplatte zu befestigendes Gehäuse, in dem eine Gurtspule drehbar gelagert ist, deren Flansche jeweils eine Sperrverzahnung aufweisen, und wenigstens einen bandförmigen Mantelabschnitt des Gehäuses aufweist, worin der bandförmige Mantelabschnitt die am Außenumfang der Flansche angebrachten Sperrverzahnungen umgibt. Der bandförmige Mantelabschnitt ist an die Befestigungsplatte angeschlossen und bildet mit dieser eine geschlossene Schlaufe. Die Lager der Gurtspule geben unter Last nach und ermöglichen so, daß sich deren Flansche an den bandförmigen Mantelabschnitt des Gehäuses anlegen. Die Gurtspule wird demnach an ihren Sperrverzahnungen von einem lasttragenden Mantelabschnitt des Gehäuses umschlungen. Dieser Mantelabschnitt wird unter Last im wesentlichen nur auf Zug beansprucht, da dann die Lager der Gurtspule nachgeben und sich deren Flansche an den Mantelabschnitt anlegen. Es ist allgemein in der Technik bekannt, daß Bauteile von gegebener Stärke wesentlich höhere Zug- als Druckbeanspruchungen aushalten. Unter hoher Zuglast verengt sich der bandförmige, die Sperrverzahnungen der Gurtspule umgebende Mantelabschnitt des Gehäuses und legt sich an die Sperrverzahnungen an. Da der Mantelabschnitt in diesem Zustand durch die Flansche der Gurtspule abgestützt wird, kann er sich nicht darüber hinaus verformen. Unter zunehmender Last wird der bandförmige Mantelabschnitt des Gehäuses fester gegen den Außenumfang der Sperrverzahnungen angepreßt, wobei ein Bandbremseffekt auftritt, der die Blockierung der Gurtspule unterstützt. Die für die Blockierung der Gurtspule vorgesehenen Sperrklinken sind daher ebenso wie die Sperrverzahnungen, mit denen sie zusammenwirken, nur mäßigen Beanspruchungen ausgesetzt und können sogar aus Kunststoff gefertigt werden, wodurch eine hohe Gewichtsersparnis erzielt wird.

Bei dem erfindungsgemäßen Gurtaufroller treten in dem bandförmigen Mantelabschnitt hohe Zugbeanspruchungen im wesentlichen nur an den beiden axial außen liegenden Randstreifen auf, die der Sperrverzahnung gegenüberliegen. Bei einer vorteilhaften Weiterbildung wird daher der mittlere Teil des bandförmigen Mantelabschnitts weitgehend ausgespart, so daß zwei in Axialrichtung der Gurtspule voneinander beabstandete Streifen entstehen, deren Enden mit der Befestigungsplatte verbunden sind.

Eine besonders rationelle und für hohe Stückzahlen geeignete Herstellung des Aufrollergehäuses wird erreicht, indem der bandförmige Mantelabschnitt aus einem einteiligen, gestanzten und gebogenen Flachmaterialstück hergestellt wird, dessen übereinandergelegte und aneinander befestigten Enden die Befestigungsplatte bilden.

Bei der bevorzugten Ausführungsform setzt sich der von dem bandförmigen Mantelabschnitt des Gehäuses umgebene Innenraum aus einem zylindrischen Teil, in dem die Gurtspule aufgenommen ist, und einem an den Umfang dieses zylinderförmigen Teils angesetzten, allgemein prismaförmigen Teil zusammen, worin die Sperrklinken untergebracht sind und wovon eine Begrenzungswand durch die Befestigungsplatte gebildet ist. Bei der Blockierung der Gurtspule unter Last stützen sich die Sperrklinken an der Innenseite des sie aufnehmenden Mantelabschnitts ab. Auch die dabei auftretenden Abstützkräfte werden im wesentlichen in Zugbeanspruchungen des bandförmigen Mantelabschnittes des Gehäuses umgesetzt.

Gemäß einer weiteren vorteilhaften Ausbildung sind die axialen Enden des Mantelabschnitts des Gehäuses durch je eine aufgesetzte Kappe abgeschlossen. Zwischen den Kappen werden sowohl die Gurtspule als auch die Sperrklinken leichtgängig gelagert. Die aufgesetzten Kappen können zur Belastbarkeit des Gehäuses erheblich beitragen, da sie mit ihrer Umfangswandung den bandförmigen Mantelabschnitt des Gehäuses in denjenigen Bereichen umgreifen, die den höchsten Beanspruchungen ausgesetzt sind. Auch diese Umfangsabschnitte der aufgesetzten Kappen werden im Belastungsfalle im wesentlichen auf Zug beansprucht.

Eine in Axialrichtung der Gurtspule besonders raumsparende Ausbildung ergibt sich bei einer weiteren vorteilhaften Weiterbildung dadurch, daß die Sperrverzahnungen jeweils am Außenumfang eines außenseitig an den zugehörigen Flansch angesetzten Ringes gebildet sind und daß dieser Ring einen zylindrischen Raum umgibt, in dem Funktionsteile des Gurtaufrollers untergebracht sind. In dem einen zylindrischen Raum innerhalb des Ringes kann beispielsweise die Aufrollerfeder untergebracht werden, und der andere zylindrische Raum nimmt die Funktionsteile des gurtbandsensitiven Ansteuermechanismus auf.

Weitere Vorteile und Merkmale der Erfindung ergeben sich aus der folgenden Beschreibung einer bevorzugten Ausführungsform und aus der Zeichnung, auf die Bezug genommen wird. In der Zeichnung zeigen:
- Fig. 1: eine Perspektivansicht des Gurtaufrollers;
- Fig. 2: eine Explosivansicht des in Fig. 1 gezeigten Gurtaufrollers; und
- Fig. 3a, b und c: schematische Seitenansichten des Gurtaufrollers zur Veranschaulichung der Sperrfunktion.

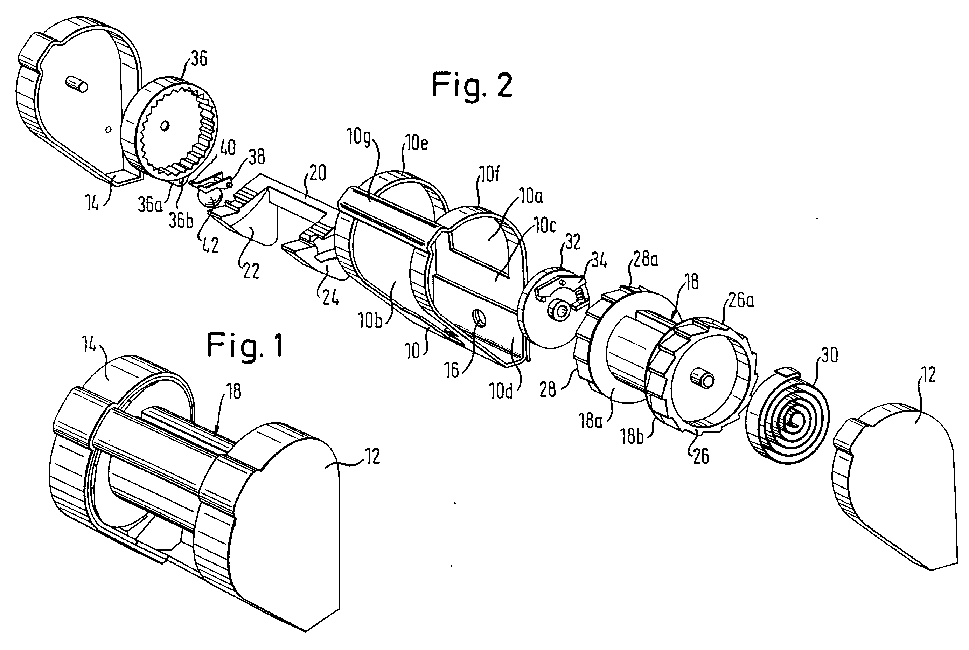

Fig. 1 läßt unmittelbar die kompakte Bauform des Gurtaufrollers erkennen. Das lasttragende Gehäuse des Gurtaufrollers ist aus einem bandförmigen, zu einer Schlaufe geschlossenen Mantelabschnitt 10 und zwei auf die axialen Enden des Mantelabschnitts 10 aufgesetzten Kappen 12, 14 gebildet. Der Mantelabschnitt 10 ist aus einem gestreckten, rechteckförmigen Flachmaterialstück, insbesondere Metallblech, hergestellt, in dessen mittlerem Bereich zwei rechteckige Fenster 10a, 10b ausgespart sind und dessen Endstücke 10c, 10d übereinandergelegt und miteinander verbunden sind. Diese übereinandergelegten Endstücke 10c, 10d bilden eine Befestigungsplatte mit einem Durchgangsloch 16 für eine Montageschraube. Die durch die ausgestanzten Fenster 10a, 10b gebildeten Streifen 10e, 10f sind durch einen Steg 10g miteinander verbunden und auf Abstand zueinander gehalten. Der Steg 10g liegt der durch die Endstücke 10c, 10d gebildeten Befestigungsplatte annähernd diametral gegenüber.

Der bandförmige Mantelabschnitt 10 des Gehäuses umgibt eine Gurtspule 18, die in den seitlich aufgesetzten Kappen 12, 14 drehbar gelagert ist. Der von dem Mantelabschnitt 10 umgebene Innenraum des Gehäuses besteht aus einem zylindrischen Raum, worin die Gurtspule 18 aufgenommen ist, und einem an den Umfang dieses zylindrischen Raumes anschließenden, allgemein prismaförmigen Raum, in dem zwei durch einen Steg 20 starr miteinander verbundene Sperrklinken 22, 24 aufgenommen sind. Dieser prismaförmige Raum ist zwischen den miteinander verbundenen Endstücken 10c, 10d des Mantelabschnitts 10 gebildet. Die Sperrklinken 22, 24 sind in den Kappen 12, 14 schwenkbar gelagert.

Sämtliche Funktionsteile des Gurtaufrollers sind in dem durch den Mantelabschnitt 10 und die Kappen 12, 14 gebildeten Raum untergebracht. Die axiale Baugröße des Gurtaufrollers wird durch die Gurtspule 18 bestimmt, deren Flansche 18a, 18b jeweils einen nach außen gerichteten Ring 26, 28 tragen. Am Außenumfang der Ringe 26, 28 ist jeweils eine Sperrverzahnung 26a, 28a angeformt. Im Inneren der Ringe 26, 28 ist jeweils ein zylindrischer Raum zur Aufnahme von Funktionsteilen des Gurtaufrollers gebildet. In dem von dem Ring 26 umgebenen Raum ist eine spiralförmige Aufrollerfeder 30 angeordnet. In dem gegenüberliegenden, von dem Ring 28 umgebenen zylindrischen Raum ist ein gurtbandsensitiver Ansteuermechanismus für die Sperrklinken 22, 24 untergebracht. Dieser Auslösemechanismus umfaßt eine drehfest mit der Gurtspule 18 verbundene Steuerscheibe 32, an deren der Gurtspule 18 zugewandter Seite eine Kupplungsklinke 34 schwenkbar in ihrem Schwerpunkt gelagert ist, und ein die Steuerscheibe umgebendes, innenverzahntes Kupplungsrad 36, das bei Eingriff der Kupplungsklinke 34 in seine Innenverzahnung durch die Gurtspule 18 begrenzt verdreht wird. Das Kupplungsrad 36 trägt an seinem Außenumfang einen Ausleger 36a, in dem ein Langloch 36b ausgespart ist. In dieses Langloch 36b greift ein seitlich von einer Steuerklinke 38 abstehender Stift 40 ein. Die Steuerklinke 38 ist in einer seitlichen Ausnehmung der Sperrklinke 22 schwenkbar gelagert. Sie liegt auf einer Sensorkugel 42 auf, die ebenso wie die Steuerklinke 38 Bestandteil eines fahrzeugsensitiven Auslösemechanismus ist. Die Spitze der Steuerklinke 38 ragt durch ein Fenster 22a auf derjenigen Seite der Sperrklinke 22, die der Sperrverzahnung 28a im zusammengebauten Zustand des Gurtaufrollers gegenüberliegt. Die Steuerklinke 38 kann daher in fahrzeugsensitiver Weise mit der Sperrverzahnung 28a zusammenwirken.

Zur Herstellung des Gurtaufrollers werden aus einem im Vergleich zu dem bei herkömmlichen Gurtaufrollern verwendeten Material dünnen Stahlblech die Fenster 10a, 10b und die Durchgangsöffnungen 16 ausgestanzt. Dann wird das gestanzte Blechstück in die gewünschte, aus Fig. 2 ersichtliche Form gerollt, wobei der Steg 10g vorzugsweise ein rinnenförmiges Profil erhält. Die übereinandergelegten Endstücke 10c, 10d werden, beispielsweise durch Punktschweißung, miteinander verbunden. Die Gurtspule 18 wird einstückig mit den Flanschen 18a, 18b und den die Sperrverzahnungen 26a, 28a aufweisenden Ringen 26, 28 ausgebildet. Wie sich ohne weiteres aus Fig. 2 ergibt, können alle Funktionsteile des Gurtaufrollers in Axialrichtung zusammengefügt werden. Zuletzt werden die Kappen 12, 14 gleichfalls in Axialrichtung aufgesetzt.

Bei der fahrzeugsensitiven Auslösung wird die Steuerklinke 38 durch die Sensorkugel 42 angehoben und in Eingriff mit der Sperrverzahnung 28a ausgelenkt. Bei Drehung der Gurtspule 18 in Abrollrichtung wird auf die Steuerklinke 38 ein Druck ausgeübt, der auf die Sperrklinke 22 übertragen wird. Diese wird daher verschwenkt, wobei ihre Spitze ebenfalls mit der Sperrverzahnung 28a in Eingriff gelangt. Durch den Steg 20 wird die Sperrklinke 24 mitgenommen und gleichzeitig mit der Sperrverzahnung 26a in Eingriff bewegt. Die Einsteuerung der Sperrklinken 22, 24 erfolgt zwangsläufig synchron mit der Drehung der Gurtspule 18, da die Sperrklinken 22, 24 über die Steuerklinke 38 bei der Drehung der Gurtspule 18 mitgenommen werden. Es kann daher ausgeschlossen werden, daß beim Blockiervorgang die Spitzen der Sperrklinken 22, 24 auf die Spitzen der Sperrverzahnungen 26a, 28a treffen.

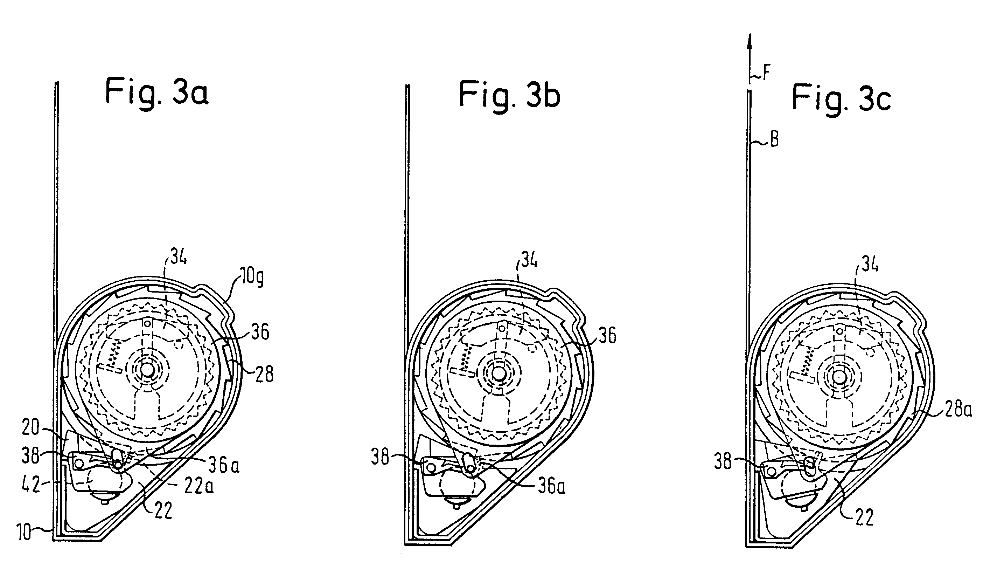

Die Funktion des gurtbandsensitiven Auslösemechanismus ist in den Fig. 3a bis 3c veranschaulicht. Fig. 3a zeigt den Ruhezustand: in diesem Zustand wird die Kupplungsklinke 34 durch eine Druckfeder gegen einen Anschlagstift und außer Eingriff mit der Innenverzahnung des Kupplungsrades 36 gehalten. Bei hoher Drehbeschleunigung der Gurtspule 18 in Abrollrichtung wird die Kupplungsklinke 34 an der Seite der Steuerscheibe 32 verschwenkt, wodurch sie mit der Innenverzahnung des Kupplungsrades 36 in Eingriff gelangt und das Kupplungsrad 36 nunmehr durch die Drehung der Gurtspule 18 mitgenommen wird. Über den Ausleger 36a am Kupplungsrad 36 wird nun der in dessen Langloch 36d eingreifende Stift 40 zugleich mit der Steuerklinke 38 hochgedrückt, so daß diese mit der Sperrverzahnung 28a in Eingriff gelangt. Bei weiterer Drehung der Gurtspule 18 werden nun die Sperrklinken 22, 24 in gleicher Weise wie zuvor für die fahrzeugsensitive Auslösung beschrieben verschwenkt und mit den Sperrverzahnungen 26a, 28a in Eingriff gebracht.

Wenn im Blockierfalle, wie in Fig. 3c gezeigt, eine hohe Zugkraft F auf das Gurtband B ausgeübt wird, so geben die Lager der Gurtspule in den Kappen 12, 14 nach, so daß die Flansche 18a, 18b der Gurtspule 18 über die Sperrverzahnungen 26a, 28a mit dem Innenumfang der Streifen 10e, 10f des Mantelabschnitts 10 in Berührung gelangen. Bei weiter zunehmender Last stützt sich die Gurtspule 18 nunmehr an dem sie umschlingenden Teil des Mantelabschnitts 10 ab, wobei dessen Streifen 10e, 10f sich wie ein Bandbremse um die Sperrverzahnungen 26a, 28a legen. Durch die dabei auftretende Reibung wird die Blockierlast an den Sperrklinken 22, 24 stark reduziert. Diese können somit für eine mindere Festigkeit ausgelegt werden, so daß auch ihre Herstellung aus Kunststoff in Betracht kommt. Da die Blockierlast ferner sehr gleichmäßig über den Umfang der Gurtspule 18 verteilt wird, kann auch diese mit vergleichsweise minderer Festigkeit ausgeführt werden, wodurch neue Möglichkeiten zur Material- und Gewichtsersparnis eröffnet werden. Große Kräfte treten nur in dem bandförmigen Mantelabschnitt 10 auf. Da hierbei der Mantelabschnitt 10 nahezu ausschließlich auf Zug beansprucht wird, kann die geforderte hohe Bruchlast bereits mit einer Wandstärke erreicht werden, die höchstens halb so groß ist wie bei den Gehäusen herkömmlicher Gurtaufroller.

## Patentansprüche

1. Gurtaufroller für Rückhaltesysteme in Fahrzeugen, mit einem am Fahrzeugaufbau mittels einer Befestigungsplatte (10c, 10d) zu befestigenden Gehäuse, in dem eine Gurtspule (18) drehbar gelagert ist, deren Flansche (18a, 18b) jeweils eine Sperrverzahnung (26a, 28a) aufweisen und wenigstens einem bandförmigem Mantelabschnitt (10) des Gehäuses, worin der bandförmige Mantelabschnitt (10) die am Außenumfang der Flansche (18a, 18b) angebrachten Sperrverzahnungen (26a, 28a) umgibt, dadurch gekennzeichnet, daß
- der bandförmige Mantelabschnitt (10) an die Befestigungsplatte (10c, 10d) angeschlossen ist und
- mit dieser eine geschlossene Schlaufe bildet,
- die Lager der Gurtspule (18) unter Last nachgeben und so ermöglichen, daß sich deren Flansche (18a, 18b) an den bandförmigen Mantelabschnitt (10) des Gehäuses anlegen.

2. Gurtaufroller nach Anspruch 1, dadurch gekennzeichnet, daß der bandförmige Mantelabschnitt (10) zwei in Axialrichtung der Gurtspule (18) voneinander beabstandete Streifen (10c, 10f) aufweist, deren Enden mit der Befestigungsplatte (10c, 10d) verbunden sind.

3. Gurtaufroller nach Anspruch 1 oder 2, dadurch gekennzeichnet, daß der bandförmige Mantelabschnitt (10) aus einem einteiligen, gestanzten und gebogenen Flachmaterialstück besteht, dessen übereinandergelegte und aneinander befestigten Enden (10e, 10d) die Befestigungsplatte bilden.

4. Gurtaufroller nach den Ansprüchen 2 und 3, dadurch gekennzeichnet, daß die Streifen (10e, 10f) an ihren Enden jeweils in ein die axiale Breite des Mantelabschnitts einnehmendes, flaches Endstück (10c, 10d) übergehen.

5. Gurtaufroller nach einem der Ansprüche 2 bis 4, dadurch gekennzeichnet, daß die Streifen (10e, 10f) in ihrem annähernd der Befestigungsplatte (10c, 10d) diametral gegenüberliegenden Bereich durch einen Steg (10g) in Axialrichtung der Gurtspule (18) miteinander verbunden sind.

6. Gurtaufroller nach Anspruch 5, dadurch gekennzeichnet, daß der Steg (10g) rinnenförmig profiliert ausgebildet ist.

7. Gurtaufroller nach einem der vorstehenden Ansprüche, dadurch gekennzeichnet, daß die axialen Enden des Mantelabschnitts (10) durch je eine aufgesetzte Kappe (12, 14) abgeschlossen sind.

8. Gurtaufroller nach Anspruch 7, dadurch gekennzeichnet, daß jede Kappe (12, 14) eines der zwei Lager der Gurtspule (18) aufweist.

9. Gurtaufroller nach einem der vorstehenden Ansprüche, dadurch gekennzeichnet, daß der Mantelabschnitt (10) einen allgemein zylinderförmigen, die Gurtspule (18) aufnehmenden Innenraum des Gehäuses umgibt, der im Bereich der Befestigungsplatte (10c, 10d) durch einen allgemein prismaförmigen Raum fortgesetzt wird, in dem zwei mit den Sperrverzahnungen (26a, 28a) der Flansche (18a, 18b) zusammenwirkende Sperrklinken (22, 24) schwenkbar gelagert sind.

10. Gurtaufroller nach Anspruch 9, dadurch gekennzeichnet, daß die Sperrklinken (22, 24) durch einen axialen Steg (20) starr miteinander verbunden sind.

11. Gurtaufroller nach einem der vorstehenden Ansprüche, dadurch gekennzeichnet, daß wenigstens eine der Sperrverzahnungen (26a, 28a) am Außenumfang eines außenseitig an den zugehörigen Flansch (18a, 18b) angesetzten Ringes (26, 28) gebildet ist und daß dieser Ring (26, 28) einen zylindrischen Raum umgibt, in dem Funktionsteile (30; 30, 36) des Gurtaufrollers untergebracht sind.

12. Gurtaufroller nach Anspruch 11, dadurch gekennzeichnet, daß in einer Ausnehmung einer der Sperrklinken (22) ein fahrzeugsensitiver Auslösemechanismus (38, 42) angeordnet ist, der eine schwenkbare Steuerklinke (38) aufweist, deren freies Ende durch ein dem Umfang der zugehörigen Sperrverzahnung (28a) gegenüberliegendes Fenster (22a) der Sperrklinke (22) ragt und in Eingriff mit der Sperrverzahnung (28a) bewegbar ist.

13. Gurtaufroller nach Anspruch 12, dadurch gekennzeichnet, daß bei Eingriff der Steuerklinke (38) mit einer der Sperrverzahnungen (28a) die Sperrklinken (22, 24) durch die Drehung der Gurtspule (18), die mittels der sich zwischen der einen Sperrverzahnung (28a) und der zugehörigen Sperrklinke (22) abstützenden Steuerklinke (38) auf die Sperrklinken (22, 24) übertragen wird, in Eingriff mit den Sperrverzahnungen (26a, 28a) geschwenkt werden.

14. Gurtaufroller nach Anspruch 13, dadurch gekennzeichnet, daß die Steuerklinke (38) durch einen in Axialrichtung der Gurtspule (18) angeschlossenen Mitnehmer (40) an ein begrenzt drehbares Kupplungsrad (36) angekoppelt ist, das seinerseits durch einen gurtbandsensitiven Auslösemechanismus (32, 34) triebschlüssig an die Gurtspule (18) ankoppelbar ist.

15. Gurtaufroller nach Anspruch 14, dadurch gekennzeichnet, daß der Mitnehmer durch einen Stift (40) gebildet ist, der in ein Langloch (36b) in einem Ausleger (36a) am Umfang des Kupplungsrades (36) eingreift.

## Claims

1. A belt retractor for vehicular seat belt restraint systems, having a housing to be secured to the body of the vehicle by means of a securing plate (10c, 10d), a belt reel (18) being rotatably mounted in said housing and the flanges (18a, 18b) of said belt reel being each provided with a locking toothing (26a, 28a), and at least one band-shaped shell section (10) of said housing, wherein said band-shaped shell section (10) surrounds said locking toothings (26a, 28a) provided on the outer circumference of said flanges (18a, 18b), characterized in that
- said band-shaped shell section (10) is connected to said securing plate (10c, 10d) and
- forms a closed loop with said securing plate (10c, 10d), and
- the bearings of said belt reel (18) yield under load, thus permitting that the flanges (18a, 18b) thereof abut against said band-shaped shell section (10) of said housing.

2. The belt retractor according to claim 1, characterized in that said band-shaped shell section (10) has two strips (10c, 10f) spaced away from each other in the axial direction of the belt reel (18), the ends of said strips being connected to said securing plate (10c, 10d).

3. The belt retractor according to claim 1 or claim 2, characterized in that the band-shaped shell section (10) is fabricated from a single piece of flat material, stamped and bent accordingly, the ends (10e, 10d) of which are placed one on the other and secured together to form the securing plate.

4. The belt retractor according to claims 2 and 3, characterized in that the strips (10e, 10f) merge at each of their ends into a flat end-piece (10c, 10d) taking up the axial width of said shell section.

5. The belt retractor according to any one of claims 2 to 4, characterized in that the strips (10e, 10f) are connected to each other by a web (10g) in the axial direction of the belt reel (18) in their region more or less diametrically opposed to said securing plate (10c, 10d).

6. The belt retractor according to claim 5, characterized in that the web (10g) has a channel-shaped section.

7. The belt retractor according to any one of the preceding claims, characterized in that the axial ends of the shell section (10) are each terminated by a fitted cap (12, 14).

8. The belt retractor according to claim 7, characterized in that each cap (12, 14) has one of the two bearings of the belt reel (18).

9. The belt retractor according to any one of the preceding claims, characterized in that the shell section (10) surrounds a generally cylindrical interior space of the housing, said interior space accommodating the belt reel (18) and being extended in the region of the securing plate (10c, 10d) by a generally prism-shaped space in which two locking pawls (22, 24) interacting with the locking toothings (26a, 28a) of the flanges (18a, 18b) are swivably mounted.

10. The belt retractor according to claim 9, characterized in that the locking pawls (22, 24) are rigidly connected to each other by an axial web (20).

11. The belt retractor according to any one of the preceding claims, characterized in that at least one of the locking toothings (26a, 28a) is formed on the outer circumference of a ring (26, 28) applied to the outside of the corresponding flange (18a, 18b) and that said ring (26, 28) surrounds a cylindrical space in which the functional parts (30; 30, 36) of the belt retractor are accommodated.

12. The belt retractor according to claim 11, characterized in that a vehicle-sensitive actuator mechanism (38, 42) is arranged in a recess of one of the locking pawls (22), said mechanism having a swivable control pawl (38), the free end of which protrudes through a window (22a) of the locking pawl (22) and is movably engageable with the locking toothing (28a) opposite the circumference of which said window (22a) is located.

13. The belt retractor according to claim 12, characterized in that on engagement of the control pawl (38) with one of the locking toothings (28a) the locking pawls (22, 24) are swivelled into engagement with the locking toothings (26a, 28a) by rotation of the belt reel (18) which is transmitted to the locking pawls (22, 24) by means of the control pawl (38) supported between the one locking toothing (28a) and the corresponding locking pawl (22).

14. The belt retractor according to claim 13, characterized in that the control pawl (38) is coupled to a coupling gearwheel (36) by a driving member (40) connected in the axial direction of the belt reel (18), said coupling gearwheel (36) having limited freedom of rotation and being in turn adapted to be drivingly coupled to the belt reel (18) by a webbing-sensitive actuator mechanism (32, 34).

15. The belt retractor according to claim 14, characterized in that said driving member is constituted by a pin (40) engaging a slot (36b) in a projection (36a) on the circumference of said coupling gearwheel (36).

## Revendications

1. Enrouleur de ceinture pour systèmes de retenue dans des automobiles, avec un boîtier à fixer sur la carrosserie de l'automobile au moyen d'une plaque de fixation (10c, 10d), boîtier dans lequel est monté de façon à pouvoir tourner une bobine de ceinture (18), dont les joues (18a, 18b) présentent respectivement une denture de blocage (26a, 28a), et avec au moins une section d'enveloppement (10), en forme de bande, du boîtier, dans lequel la section d'enveloppement (10), en forme de bande, entoure les dentures de blocage (26a, 28a) placées sur le pourtour extérieur des joues (18a, 18b), caractérisé en ce que
- la section d'enveloppement (10) en forme de bande est raccordée à la plaque de fixation (10c, 10d) et
- forme avec celle-ci un crochet fermé,
- les paliers de la bobine (18) fléchissent quand ils sont en charge et permettent ainsi à ses joues (18a, 18b) de s'appliquer sur la section d'enveloppement (10) du boîtier, en forme de bande.

2. Enrouleur de ceinture selon la revendication 1, caractérisé en ce que la section d'enveloppement en forme de bande (10) présente deux bandes (10c, 10f), situées à une certaine distance l'une de l'autre, dans le sens axial de la bobine (18) de la ceinture, bandes dont les extrémités sont reliées à la plaque de fixation (10c, 10d).

3. Enrouleur de ceinture selon la revendication 1 ou 2, caractérisé en ce que la section d'enveloppement en forme de bande (10) consiste en un morceau d'une seule pièce, pris dans un matériau plat, estampé et coudé, dont les extrémités (10e, 10d) superposées et fixées l'une à l'autre forment la plaque de fixation.

4. Enrouleur de ceinture selon les revendications 2 et 3, caractérisé en ce que les bandes (10e, 10f) se transforment à leurs extrémités respectivement en une pièce terminale (10c, 10d) plate, occupant la largeur axiale de la section d'enveloppement.

5. Enrouleur de ceinture selon l'une des revendications 2 à 4, caractérisé en ce que les bandes (10e, 10f) sont reliées l'une à l'autre, dans leur zone approximativement diamétralement opposée à la plaque de fixation (10c, 10d), par une entretoise (10g) dans le sens axial de la bobine (18) de la ceinture.

6. Enrouleur de ceinture selon la revendication 5, caractérisé en ce que l'entretoise (10g) est dotée d'un profil en forme de gouttière.

7. Enrouleur de ceinture selon l'une des revendications précédentes, caractérisé en ce que les extrémités axiales de la section d'enveloppement (10) sont fermées chacune par un chapeau (12, 14) posé dessus.

8. Enrouleur de ceinture selon la revendication 7, caractérisé en ce que chaque chapeau (12, 14) contient l'un des deux paliers de la bobine (18) de la ceinture.

9. Enrouleur de ceinture selon l'une des revendications précédentes, caractérisé en ce que la section d'enveloppement (10) entoure un espace interne du boîtier de forme générale cylindrique, qui reçoit la bobine (18) de la ceinture, espace interne qui se prolonge dans la zone de la plaque de fixation (10c, 10d) par un espace de forme générale prismatique, dans lequel sont montés, de façon à pouvoir pivoter, deux cliquets d'arrêt (22, 24) qui coopèrent avec les dentures de blocage (26a, 28a) des joues (18a, 18b).

10. Enrouleur de ceinture selon la revendication 9, caractérisé en ce que les cliquets d'arrêt (22, 24) sont reliés rigidement l'un à l'autre par une entretoise axiale (20).

11. Enrouleur de ceinture selon l'une des revendications précédentes, caractérisé en ce qu'au moins l'une des dentures de blocage (26a, 28a) est formée sur le pourtour extérieur d'une bague (26, 28), apposée du côté extérieur sur la joue correspondante (18a, 18b), et en ce que cette bague (26, 28) entoure un espace cylindrique, dans lequel sont logées des pièces de fonctionnement (30; 30, 36) de l'enrouleur de ceinture.

12. Enrouleur de ceinture selon la revendication 11, caractérisé en ce que l'on dispose dans un évidement de l'un des cliquets d'arrêt (22) un mécanisme de déclenchement (38, 42), sensible au véhicule, qui présente un cliquet de commande (38), pouvant pivoter, dont l'extrémité libre passe à travers une fenêtre (22a) du cliquet d'arrêt (22) se trouvant en regard du pourtour de la denture de blocage correspondante (28a) et peut se déplacer en étant en prise avec la denture de blocage (28a).

13. Enrouleur de ceinture selon la revendication 12, caractérisé en ce que, lorsque le cliquet de commande (38) est en prise avec l'une des dentures de blocage (28a), les cliquets d'arrêt (22, 24) viennent en prise, en pivotant, avec les dentures de blocage (26a, 28a) sous l'action de la rotation de la bobine (18) de la ceinture, qui se transmet aux cliquets d'arrêt (22, 24) au moyen du cliquet de commande (38) qui s'appuie entre l'une des dentures de blocage (28a) et le cliquet d'arrêt correspondant (22).

14. Enrouleur de ceinture selon la revendication 13, caractérisé en ce que le cliquet de commande (38) est couplé, par un entraîneur (40) raccordé dans le sens axial de la bobine (18) de la ceinture, à une roue d'accouplement (36) qui peut tourner de façon limitée, roue qui de son côté peut être couplée, par un mécanisme de déclenchement sensible à la ceinture (32, 34), à la bobine (18) de la ceinture par une liaison d'entraînement.

15. Enrouleur de ceinture selon la revendication 14, caractérisé en ce que l'entraîneur est constitué par un axe (40), qui vient en prise dans un trou oblong (36b) dans une excroissance (36a) sur le pourtour de la roue d'accouplement (36).
